# EUROPÄISCHE PATENTSCHRIFT

(11) **EP 1 441 918 B1**
(45) Veröffentlichungstag und Bekanntmachung des Hinweises auf die Patenterteilung: **20.04.2011**
(21) Anmeldenummer: 02802610.2
(22) Anmeldetag: 07.11.2002
(51) Int. Cl.: B60G 7/00, B62D 29/00

(54) **LAGERAUFNAHME EINER AUS VERBUNDWERKSTOFFEN HERGESTELLTEN KRAFTVERBINDUNGSSTREBE**
BEARING SEAT OF A TENSION STRUT MADE OF COMPOSITE MATERIALS
LOGEMENT DE PALIER D'UNE JAMBE DE FORCE EN MATERIAUX COMPOSITES

(30) Priorität: 07.11.2001 DE 10154210
(43) Veröffentlichungstag der Anmeldung: 04.08.2004
(73) Patentinhaber: ZF Lemförder Metallwaren AG, 49441 Lemförde (DE)
(72) Erfinder: SCHÖNHOFF, Stefan, 49191 Belm (DE); KRUSE, Jochen, 49088 Osnabrück (DE); BUDDE, Frank, 49401 Damme (DE)
(86) Internationale Anmeldenummer: PCT/DE2002/004141
(87) Internationale Veröffentlichungsnummer: WO 2003/039893

(56) Entgegenhaltungen:
- DE-A- 19 854 084
- DE-A- 19 931 079

## Beschreibung

Die Erfindung betrifft eine Lageraufnahme einer aus Verbundwerkstoffen hergestellten Kraftverbindungsstrebe für ein Fahrwerk eines Kraftfahrzeuges, wobei die Kraftverbindungsstrebe einen länglichen Grundkörper und eine, diesen Grundkörper durchdringende Hülse aufweist. Vorzugsweise werden solche Lageraufnahmen in Verbindung mit Achsstreben oder Fahrwerkslenkem verwendet.

Eine ähnliche Lageraufnahme eines Fahrwerksteils ist aus der DE 199 31 079 A1 bekannt. Diese Offenlegungsschrift offenbart ein Fahrwerksteil mit enger Federwegkennung, wobei dieses Fahrwerksteil, welches beispielsweise einen Achslenker darstellen kann, eine längliche Grundstruktur in Form einer Strebe aufweist und an den Enden der Strebe Öffnungen vorgesehen sind, in denen sich eine Außenhülse befindet, in der wiederum ein Polster aus elastomerem Werkstoff mit einer weiteren innenliegenden Buchse angeordnet ist. In einer besonderen Ausführung weist die Hülse in ihrer Mitte eine ballige Erweiterung auf. Die Befestigung der Hülse im Grundkörper ist nicht näher beschrieben, jedoch scheint es sich um eine Verpressung der Hülse mit dem Grundkörper zu handeln.

Aus der DE 198 540 84 ist eine Achsstrebe auss Faserverbundkunststoff bekannt.

Ein Problem bei derartigen eingepressten Hülsen kann darin bestehen, dass durch die auftretenden axialen Kräfte es während des Betriebes zu einem Lösen der Hülse vom Grundkörper kommen kann.

Es ist Aufgabe der Erfindung eine weitere einfache Form einer Lageraufnahme für eine Kraftverbindungsstrebe eines Fahrwerks zu finden, die einen sicheren Sitz der Hülse in dem Grundkörper garantiert.

Diese Aufgabe wird durch die Merkmale des unabhängigen Patentanspruches gelöst. Vorteilhafte Weiterbildungen der Erfindung sind Gegenstand untergeordneter Ansprüche.

Demgemäß schlagen die Erfinder vor, die an sich bekannte Lageraufnahme aus Verbundwerkstoffen an einer Kraftverbindungsstrebe eines Fahrwerks eines Personen- oder Nutzkranwagens, weiterzuentwickeln, wobei die Kraftverbindungsstrebe einen länglichen Grundkörper und eine diesen Grundkörper durchdringende Hülse aufweist. Die Weiterentwicklung besteht darin, dass die Hülse zumindest auf einer Seite einen Flansch aufweist, und durch Umspritzen zumindest an einem ihrer Enden mit Kunststoff mit dem Grundkörper verbunden ist. Das Umspritzen der Hülse beziehungsweise des Flansches kann erfindungsgemäß vollständig oder lediglich im radialen Bereich des Flansches erfolgen. Durch diese Art der Ausführung der Hülse und des Umspritzens mit Kunststoff wird eine sehr sichere Verbindung zwischen dem Grundkörper und der Hülse geschaffen, so dass auch bei stärkeren einwirkenden Kräften ein Lösen der Hülse vom Grundkörper vermieden werden kann.

Eine vorteilhafte Weiterbildung der Erfindung sieht vor, dass der Grundkörper zumindest im Bereich der Lageraufnahme eine Metalleinlage aufweist, welche ebenfalls von der Hülse durchdrungen wird. Hierdurch wird eine zusätzliche Stabilität der Verbindung zwischen Lageraufnahme und Grundkörper erreicht.

Außerdem schlagen die Erfinder vor, dass die Hülse in zumindest einer Ebene in direktem kraftschlüssigen Kontakt mit der Metalleinlage des Grundkörpers steht. Hierdurch kann sich die Hülse zusätzlich direkt an der Metalleinlage des Grundkörpers abstützen, so dass eine Stabilisierungsverbesserung der Verbindung von Grundkörper und Hülse erreicht wird.

Entsprechend dem Erfindungsgedanken kann die Hülse beispielsweise aus Metall, vorzugsweise Stahl oder Aluminium oder aus einer Metalllegierung bestehen. Allerdings besteht auch die Möglichkeit, bei einer etwas geringer belasteten Lageraufnahme, die Hülse aus Kunststoff herzustellen.

Für den Fall, dass die Lageraufnahme axial nicht nur in einer, sondern in beiden Richtungen belastet wird, kann es vorteilhaft sein, wenn die Hülse an beiden Enden einen Flansch aufweist, so dass eine Abstützung in beide axiale Richtungen der Hülse über den Flansch gegenüber dem Grundkörper beziehungsweise der Metalleinlage möglich ist. Beispielsweise kann dies dadurch erreicht werden, dass eine Hülse mit nur einem einzigen Flansch in die Öffnung einer Metalleinlage eingesetzt wird, anschließend der zweite Flansch, im Falle einer Kunststoff-Hülse, beispielsweise durch Ultraschall-Schweißen oder durch entsprechende Kaltverformung einer metallischen Hülse erzeugt wird. Anschließend kann die Kunststoff-Struktur um die Metalleinlage einschließlich der darin befindlichen Hülse gespritzt werden.

Falls der Grundkörper, an dem sich die Lageraufnahme befindet, über eine entsprechend geformte oder über zwei entsprechend angeordnete Metalleinlagen im Bereich der Lageraufnahme verfügt, so besteht die Möglichkeit, in der Metalleinlage zwei einander gegenüber liegende Öffnungen zu erzeugen, so dass die Hülse beide Öffnungen einer oder beider Metalleinlagen durchdringt.

Eine weitere Verbesserung der Lageraufnahme kann dadurch bewirkt werden, dass der verwendete Kunststoff, welcher die Hülse umspritzt, zumindest teilweise mit Faserverstärkungen versehen ist, wobei beispielsweise Glasfaser, Kohlefaser oder Aramidfaser verwendet werden können. Wird hierbei der Faseranteil der Faserverstärkungen derart gewählt werden, dass das Wärmeausdehnungsverhalten der Kunststoffstrukturen wenigstens im Bereich der Betriebstemperaturen zumindest weitgehend dem Wärmeausdehnungsverhalten der Hülse entspricht, so können auch Schäden vermieden werden, die durch häufige Temperaturschwankungen und unterschiedliches Wärmeausdehnungsverhalten der Materialien entstehen könnten.

Eine weitere Verbesserung der Einbindung der Hülse der Lageraufnahme in den Grundkörper kann dadurch erreicht werden, dass zumindest ein Flansch der Hülse auch auf der axialen Ober- und/oder Unterseite mit Kunststoff umspritzt wird. Hierdurch wird zusätzlich ein weitergehender Korrosionsschutz für die Hülse, insbesondere wenn diese aus Metall besteht, erreicht.

Bezüglich der Lebensdauer der Lageraufnahme ist es auch von Vorteil, wenn die Hülse, insbesondere wenn sie aus Metall hergestellt ist, einen korrosionshemmenden Oberflächenschutz aufweist.

Zur Verbesserung der Stabilität und zur Begünstigung des Formschlusses mit dem umgebenden Kunststoff kann es außerdem vorteilhaft sein, die Hülse mit Sicken zu versehen. Des Weiteren kann der Formschluss auch dadurch verbessert werden, dass die Hülse Aussparungen, beispielsweise im Bereich des Flansches, aufweist.

Des Weiteren schlagen die Erfinder vor, dass die Öffnung der Metalleinlage, in die die Hülse eingesetzt wird, eine rotationsunsymmetrische Form und die Hülse eine hier hinein passende Außenform aufweist, so dass ein Verdrehen von Hülse zur Metalleinlage verhindert wird.

Zusätzlich schlagen die Erfinder, insbesondere im Hinblick auf die Möglichkeit des Einsetzen eines Molekularlagers in die Hülse, vor, dass diese auf ihrer Innenseite über eine radiale Einschnürung verfügt.

In einer besonderen Ausführungsform der Lageraufnahme wird außerdem vorgeschlagen, dass die Metalleinlage innerhalb des Grundkörpers derart gestaltet ist, dass sie die Hülse in Form einer Schleife umschlingt.

Weiterhin kann die Kunststoff-Struktur, in welche die Hülse eingebettet ist, übergangslos auch die Metalleinlage der Kraftverbindungsstrebe umgeben und so die äußere Form der Kraftverbindungsstrebe bestimmen.

Die Metalleinlage kann vorteilhaft weiterhin so gestaltet werden, dass sie zur Aufnahme eines Molekularlagers oder eines Kugellagers oder eines Festlagers ausgebildet ist.

Anzumerken ist noch, dass es sich bei der Hülse im Sinne der Erfindung nicht nur um ein zylindrisch ausgebildetes Element handeln kann, sondern beispielsweise auch um einen Napf handeln kann, der die Form eines Kugelgelenkgehäuses besitzt.

Im Folgenden wird die Erfindung anhand der bevorzugten Ausführungsbeispiele mit Hilfe der Figuren näher beschrieben. Es zeigen im Einzelnen:
- Figur 1:: Lageraufnahme mit einer in Kunststoff eingebetteten Hülse mit einem Flansch;
- Figur 2:: Lageraufnahme mit einer in Kunststoff eingebetteten Hülse mit beidseitigem Flansch;
- Figur 3:: Lageraufnahme mit einer Hülse mit zwei Flanschen, eingebettet in Kunststoff mit Ausnahme der Flansche;
- Figur 4:: In einem H-Profil aus Kunststoff eingebettetes U-Profil mit Lageraufnahmen;
- Figur 5:: Kunststoff-H-Profil mit zwei Metalleinlagen und Lageraufnahmen;
- Figur 6:: Kunststoff-U-Profil mit einer Metalleinlage;
- Figur 7:: Kunststoff-H-Profil mit einer Metalleinlage in L-Form mit Lageraufnahme im zentralen Schenkel.

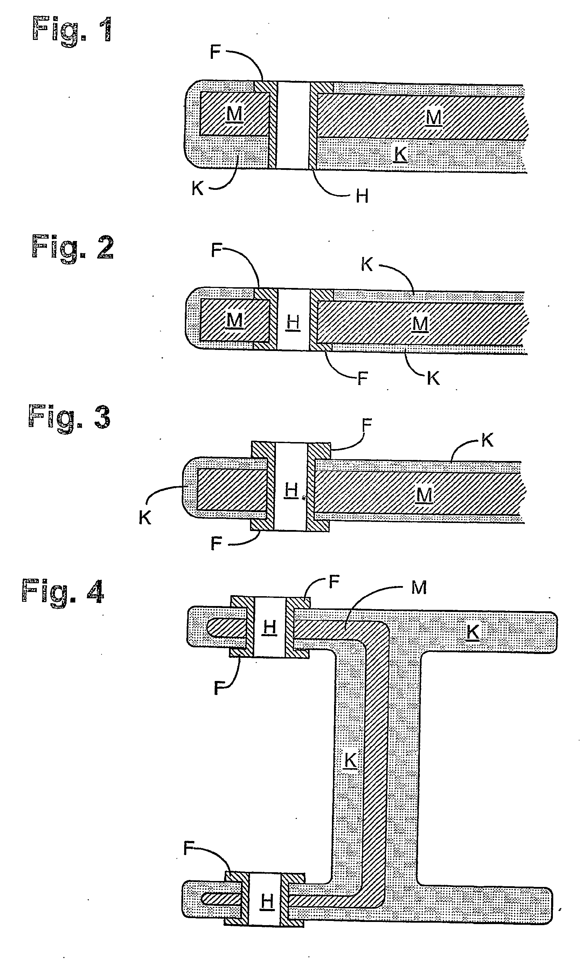

Die Figur 1 zeigt einen Querschnitt durch ein Ende des Grundkörpers eines Kraftverbindungsstrebe, welcher mit einer Metalleinlage M versehen ist. In der Metalleinlage M befindet sich eine Öffnung, durch die eine Hülse H gesteckt wurde. Die Hülse H verfügt auf einer Seite über einen Flansch F, der ein Durchrutschen der Hülse H durch die Metalleinlage verhindert. Um die Metalleinlage M und die Hülse H ist eine Kunststoff-struktur K gespritzt, welche die äußere Kontur der Kraflverbindungsstrebe bestimmt und im Bereich der Lageraufnahme, die durch die Hülse H gebildet wird, gleichzeitig auch eine Befestigung für die Hülse darstellt.

Die Figur 2 zeigt eine ähnliche Variante wie in Figur 1, jedoch verfügt die Hülse H der Lageraufnahme in diesem Falle über zwei Flansche F, die radial mit Kunststoff K verspritzt sind.

Eine weitere Variante der Lageraufnahme ist in der Figur 3 gezeigt. Hier ist ebenfalls ein Ende einer Kraftverbindungsstrebe gezeigt, welche über eine Metalleinlage M verfügt, in der eine Öffnung für die Hülse H vorgesehen ist. Jedoch ist in diesem vorliegenden Fall der Abstand zwischen den beiden Flanschen F der Hülse H größer als die Dicke der Metalleinlage M, so dass die Flansche F radial frei von Kunststoff K sind und nur der nicht zu den Flanschen gehörende zylindrische Teil der Hülse H von Kunststoff K umschlossen wird. Auf diese Weise sitzt die Hülse H der Lageraufnahme mit den Unterseiten der beiden Flansche F auf der Kunststoff-Struktur K der Kraftverbindungsstrebe auf.

Eine andere Variante einer erfindungsgemäßen Lageraufnahme ist in der Figur 4 dargestellt. Diese zeigt den Querschnitt durch ein H-förmiges Kunststoff-Profil mit einer U-förmigen Metalleinlage M. Auf dem oberen und unteren linken Schenkel des H sind Öffnungen vorgesehen, durch die jeweils zwei sich axial gegenüber liegende Hülsen H eingebracht sind, deren Ausbildungsform der Figur 3 entspricht. In ihrem Zusammenwirken bilden die obere und die untere Hülse gemeinsam eine einzige Lageraufnahme.

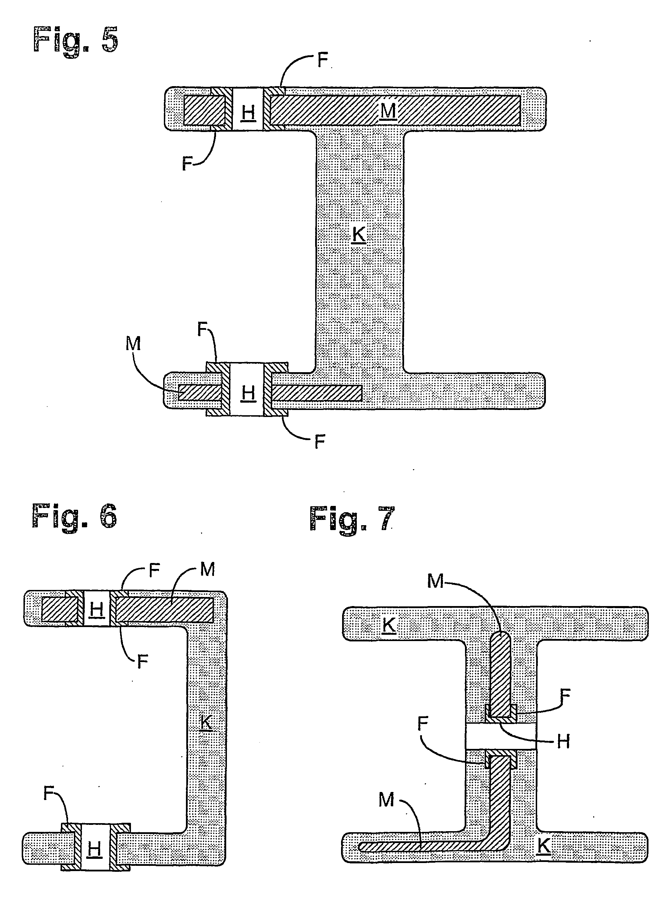

Eine weitere Variante der sich axial gegenüberliegenden Hülsen H, die eine Lageraufnahme bilden, ist in der Figur 5 gezeigt. Hier liegt ebenfalls eine Kunststoff-Struktur K in H-Form vor, in der jedoch zwei von einander getrennte Metalleinlagen M angeordnet sind. Eine etwas breitere über den gesamten oberen Schenkel verlaufende Metalleinlage M ist oben zu sehen, während im unteren Schenkel nur eine über den linken Bereich verlaufende kleinere Metalleinlage M dargestellt ist. Die obere Hülse H entspricht in ihrer Anbringungsform der Figur 1 oder 2, während die untere Hülse H, die axial zur oberen Hülse H angeordnet ist, der Anbringungsform der Figur 3 oder 4 entspricht.

Die Figur 6 zeigt ein Kunststoff U-Profil mit einer integrierten Metalleinlage M, wobei die beiden Schenkel des U-Profils von jeweils einer Hülse H durchdrungen werden, welche in ihrem Zusammenwirken eine einzige Lageraufnahme bilden.

Schließlich zeigt die Figur 7 nochmals ein Kunststoff H-Profil mit integrierter Metalleinlage M in L-Form. Die Lageraufnahme ist hier im senkrechten, zentralen Schenkel des H-Profils angebracht, wobei die eingesetzte Hülse H mit Ausnahme des zylindrischen Innenraums vollständig von Kunststoff K umgeben ist und auch hier die Metalleinlage M durchdringt.

Insgesamt wird also durch die erfindungsgemäße Lageraufnahme ein sehr guter und fester Sitz der Hülse H am oder im Grundkörper einer Kraftverbindungsstrebe erreicht, wobei außerdem der einfache Aufbau eine sehr schnelle und kostengünstige Fertigung erlaubt.

## Patentansprüche

1. Lageraufnahme einer aus Verbundwerkstoffen hergestellten Kraftverbindungsstrebe in einem Fahrwerk eines Kraftfahrzeuges, wobei die Kraftverbindungsstrebe einen länglichen Grundkörper und eine, diesen Grundkörper durchdringende Hülse (H) aufweist, **dadurch** gekenntzeichnet, dass die Hülse (H) zumindest auf einer Seite einen Flansch (F) aufweist, und durch Umspritzen zumindest an einem ihrer Enden mit Kunststoff (K) mit dem Grundkörper verbunden ist.

2. Lageraufnahme gemäß dem voranstehenden Patentanspruch 1, **dadurch gekennzeichnet, dass** der Grundkörper zumindest im Bereich der Lageraufnahme eine Metalleinlage (M) aufweist, die von der Hülse (H) durchdrungen ist.

3. Lageraufnahme gemäß einem der voranstehenden Patentansprüche, **dadurch gekennzeichnet, dass** die Hülse (H) in zumindest einer Ebene in direktem kraftschlüssigen Kontakt mit der Metalleinlage (M) des Grundkörpers steht.

4. Lageraufnahme gemäß einem der voranstehenden Patentansprüche, **dadurch gekennzeichnet, dass** die Hülse (H) aus Kunststoff, aus Metall, vorzugsweise aus Stahl oder Aluminium oder einer Metalllegierung besteht.

5. Lageraufnahme gemäß einem der voranstehenden Patentansprüche, **dadurch gekennzeichnet, dass** die Hülse (H) an beiden Enden je einen Flansch (F) aufweist.

6. Lageraufnahme gemäß einem der voranstehenden Patentansprüche, **dadurch gekennzeichnet, dass** die Hülse (H) zwei einander gegenüber liegende Öffnungen einer oder zweier Metalleinlagen (M) durchdringt.

7. Lageraufnahme gemäß einem der voranstehenden Patentansprüche, **dadurch gekennzeichnet, dass** der verwendete Kunststoff (K) zumindest teilweise Faserverstärkungen, vorzugsweise aus Glasfasern, Kohlefasern oder Aramidfasern aufweist.

8. Lageraufnahme gemäß dem voranstehenden Patentanspruch 7, **dadurch gekennzeichnet, dass** die Faseranteile der Faserverstärkungen derart gewählt werden, dass das Wärmeausdehnungsverhalten der Kunststoffstrukturen (K) im Bereich der Betriebstemperaturen zumindest weitgehend dem Wärmeausdehnungsverhalten der Hülse (H) entspricht.

9. Lageraufnahme gemäß einem der voranstehenden Patentansprüche, **dadurch gekennzeichnet, dass** deren äußere Form ausschließlich durch die Kunststoffstruktur (K) bestimmt ist.

10. Lageraufnahme gemäß einem der voranstehenden Patentansprüche, **dadurch gekennzeichnet, dass** zumindest ein Flansch (F) der Hülse (H) auch auf der axialen Ober- und/oder Unterseite mit Kunststoff umspritzt ist.

11. Lageraufnahme gemäß einem der voranstehenden Patentansprüche, **dadurch gekennzeichnet, dass** die metallische Hülse (H) eine korrosionshemmende Oberflächenbeschichtung aufweist.

12. Lageraufnahme gemäß einem der voranstehenden Patentansprüche, **dadurch gekennzeichnet, dass** die Hülse (H) Sicken zur Erreichung eines Formschlusses mit dem umgebenden Kunststoff und Verbesserung der Stabilität aufweist.

13. Lageraufnahme gemäß einem der voranstehenden Patentansprüche, **dadurch gekennzeichnet, dass** die Hülse (H) Aussparungen zur Erreichung eines Formschlusses mit dem umgebenden Kunststoff (K) aufweist.

14. Lageraufnahme gemäß einem der voranstehenden Patentansprüche 2 bis 13, **dadurch gekennzeichnet, dass** die Öffnung der Metalleinlage (M) eine rotationsunsymmetrische Form und die Hülse (H) eine hierein passende Außenform aufweist, so dass ein Verdrehen von Hülse (H) zu Metalleinlage (M) verhindert wird.

15. Lageraufnahme gemäß einem der voranstehenden Patentansprüche, **dadurch gekennzeichnet, dass** die Hülse (H) innen eine radiale Einschnürung aufweist.

16. Lageraufnahme gemäß einem der voranstehenden Patentansprüche 2 bis 15, **dadurch gekennzeichnet, dass** die Metalleinlage (M) die Hülse (H) in Form einer Schleife umschlingt.

17. Lageraufnahme gemäß einem der voranstehenden Patentansprüche 2 bis 16, **dadurch gekennzeichnet, dass** die Kunststoffstruktur(K), die die Hülse (H) einbettet übergangslos auch die Metalleinlage (M) der Kraftverbindungsstrebe umgibt.

18. Lageraufnahme gemäß einem der voranstehenden Patentansprüche, **dadurch gekennzeichnet, dass** sie zur Aufnahme eines Molekularlagers oder eines Kugellagers oder eines Festlagers ausgebildet ist.

## Claims

1. Bearing seat of a tension strut made of composite materials in the chassis of a motor vehicle, wherein the tension strut has an elongate base body and a bush (H) which extends through said base body, **characterized in that** the bush (H) has a flange (F) at least on one side and is connected to the base body by encapsulation by moulding with plastic (K) at least at one of its ends.

2. Bearing seat according to the preceding Patent Claim 1, **characterized in that** the base body has a metal insert (M) at least in the region of the bearing seat, and the bush (H) extends through said metal insert.

3. Bearing seat according to either of the preceding patent claims, **characterized in that** the bush (H) is in direct frictional contact with the metal insert (M) of the base body in at least one plane.

4. Bearing seat according to one of the preceding patent claims, **characterized in that** the bush (H) consists of plastic, of metal, preferably of steel or aluminium or of a metal alloy.

5. Bearing seat according to one of the preceding patent claims, **characterized in that** the bush (H) has a flange (F) at each end.

6. Bearing seat according to one of the preceding patent claims, **characterized in that** the bush (H) extends through two openings which lie opposite one another in one or two metal inserts (M).

7. Bearing seat according to one of the preceding patent claims, **characterized in that** the plastic (K) used at least partially has fibre reinforcements, preferably of glass fibres, carbon fibres or aramid fibres.

8. Bearing seat according to the preceding Patent Claim 7, **characterized in that** the fibre contents of the fibre reinforcements are selected in such a manner that the thermal expansion properties of the plastic structures (K) in the region of the operating temperatures correspond at least extensively to the thermal expansion properties of the bush (H).

9. Bearing seat according to one of the preceding patent claims, **characterized in that** the outer shape of said bearing seat is determined exclusively by the plastic structure (K).

10. Bearing seat according to one of the preceding patent claims, **characterized in that** at least one flange (F) of the bush (H) is also encapsulated by moulding with plastic on the axial top and/or bottom side.

11. Bearing seat according to one of the preceding patent claims, **characterized in that** the metallic bush (H) has an anti-corrosion surface coating.

12. Bearing seat according to one of the preceding patent claims, **characterized in that** the bush (H) has beads in order to achieve a positive lock with the surrounding plastic and to improve the stability.

13. Bearing seat according to one of the preceding patent claims, **characterized in that** the bush (H) has recesses in order to achieve a positive lock with the surrounding plastic (K).

14. Bearing seat according to one of the preceding Patent Claims 2 to 13, **characterized in that** the opening in the metal insert (M) has a rotationally asymmetrical shape and the bush (H) has an outer shape which fits into the latter, and therefore twisting of the bush (H) in relation to the metal insert (M) is prevented.

15. Bearing seat according to one of the preceding patent claims, **characterized in that** the inner side of the bush (H) is provided with a radial constriction.

16. Bearing seat according to one of the preceding Patent Claims 2 to 15, **characterized in that** the metal insert (M) embraces the bush (H) in the form of a loop.

17. Bearing seat according to one of the preceding Patent Claims 2 to 16, **characterized in that** the plastic structure (K), in which the bush (H) is embedded, also surrounds the metal insert (M) of the tension strut uninterruptedly.

18. Bearing seat according to one of the preceding patent claims, **characterized in that** it is designed to receive a molecular bearing or a ball bearing or a fixed bearing.

## Revendications

1. Logement de palier d'une jambe de force fabriquée en matériaux composites dans un train de roulement d'un véhicule automobile, dans lequel la jambe de force présente un corps de base allongé et une douille (H) traversant ce corps de base, **caractérisé en ce que** la douille (H) présente une bride (F) au moins sur un côté et est assemblée au corps de base avec une matière plastique (K) par projection sur au moins une de ses extrémités.

2. Logement de palier selon la revendication précédente 1, **caractérisé en ce que** le corps de base présente, au moins dans la région du logement de palier, une pièce intérieure métallique (M), qui est traversée par la douille (H).

3. Logement de palier selon l'une quelconque des revendications précédentes, **caractérisé en ce que** la douille (H) se trouve en contact forcé direct avec la pièce intérieure métallique (M) dans au moins un plan.

4. Logement de palier selon l'une quelconque des revendications précédentes, **caractérisé en ce que** la douille (H) est constituée de matière plastique, de métal, de préférence d'acier ou d'aluminium ou d'un alliage métallique.

5. Logement de palier selon l'une quelconque des revendications précédentes, **caractérisé en ce que** la douille (H) présente une bride (F) à chacune des deux extrémités.

6. Logement de palier selon l'une quelconque des revendications précédentes, **caractérisé en ce que** la douille (H) traverse deux ouvertures situées l'une en face de l'autre d'une ou de deux pièces intérieures métalliques (M).

7. Logement de palier selon l'une quelconque des revendications précédentes, **caractérisé en ce que** la matière plastique utilisée (K) présente au moins en partie des renforcements en fibres, de préférence en fibres de verre, en fibres de carbone ou en fibres d'aramide.

8. Logement de palier selon la revendication précédente 7, **caractérisé en ce que** les proportions de fibres des renforcements en fibres sont choisies de telle manière que le comportement de dilatation thermique des structures en matière plastique (K) dans la plage des températures d'utilisation corresponde au moins largement au comportement de dilatation thermique de la douille (H).

9. Logement de palier selon l'une quelconque des revendications précédentes, **caractérisé en ce que** sa forme extérieure est déterminée exclusivement par la structure en matière plastique (K).

10. Logement de palier selon l'une quelconque des revendications précédentes, **caractérisé en ce qu'**au moins une bride (F) de la douille (H) est enrobée de matière plastique par projection également sur le côté axial supérieur et/ou inférieur.

11. Logement de palier selon l'une quelconque des revendications précédentes, **caractérisé en ce que** la douille métallique (H) présente un revêtement de surface anticorrosion.

12. Logement de palier selon l'une quelconque des revendications précédentes, **caractérisé en ce que** la douille (H) présente des moulures destinées à former un assemblage par emboîtement avec la matière plastique environnante et à améliorer la stabilité.

13. Logement de palier selon l'une quelconque des revendications précédentes, **caractérisé en ce que** la douille (H) présente des évidements destinés à former un assemblage par emboîtement avec la matière plastique environnante (K).

14. Logement de palier selon l'une quelconque des revendications précédentes 2 à 13, **caractérisé en ce que** l'ouverture de la pièce intérieure métallique (M) présente une forme non symétrique en rotation et la douille (H) présente une forme extérieure s'ajustant dans celle-ci, de façon à empêcher une rotation de la douille (H) par rapport à la pièce intérieure métallique (M).

15. Logement de palier selon l'une quelconque des revendications précédentes, **caractérisé en ce que** la douille (H) présente intérieurement un étranglement radial.

16. Logement de palier selon l'une quelconque des revendications précédentes 2 à 15, **caractérisé en ce que** la pièce intérieure métallique (M) entoure la douille (H) sous la forme d'une boucle.

17. Logement de palier selon l'une quelconque des revendications précédentes 2 à 16, **caractérisé en ce que** la structure en matière plastique (K), qui enrobe la douille (H), entoure également sans transition la pièce intérieure métallique (M) de la jambe de force.

18. Logement de palier selon l'une quelconque des revendications précédentes, **caractérisé en ce qu'**il est réalisé en vue de recevoir un palier moléculaire ou un roulement à billes ou un palier fixe.
